# EUROPEAN PATENT APPLICATION

(11) **EP 0 838 165 A1**
(43) Date of publication of application: **29.04.1998**
(21) Application number: 97118295.1
(22) Date of filing: 21.10.1997
(51) Int. Cl.: A24C 5/35, B65G 47/51

(54) **Variable-capacity store for products**

(30) Priority: 22.10.1996 IT BO960528
(71) Applicant: G.D SOCIETA' PER AZIONI, I-40133 Bologna (IT)
(72) Inventor: Draghetti, Fiorenzo, 40059 Medicina (IT); Manservigi, Alberto, 40100 Bologna (IT)
(74) Representative: Jorio, Paolo

(57) **Abstract**

A variable-capacity store (1) for products (2), for storing the products (2) along a storage path (P) variable in length and having two conveying portions (P1, P2) winding in a spiral about an axis (A) of the store (1); a bridge type diverting device (10) is connected in sliding manner to the two conveying portions (P1, P2) to divert the products (2) from one conveying portion (P1) to the other (P2) varying the length (L) of the storage path (P); and the two conveying portions (P1, P2) are oppositely inclined, and are aligned with each other along the aforementioned axis (A).

## Description

The present invention relates to a variable-capacity store for products.

Here and hereinafter, the term "products" is intended to mean single products, such as packets of cigarettes, to which the following description refers purely by way of example. However, the following description also applies equally to loose products, such as cigarettes in bulk form.

For storing packets of cigarettes, a first-in, first-out, variable-capacity store is interposed between a cellophaning machine and a cartoning machine; the number of packets contained in the store varies according to operation of the two machines; and the first packets in are the first packets out of the store.

From European Patent No. 581,143, variable-capacity stores of the above type are known, which comprise a storage path varying in length and having two conveying portions winding one inside the other about a common axis in respective equally-inclined spirals; and a diverting device movable along both the conveying portions to vary the length of the storage path, and in turn comprising a diverting plate tangent to the conveying portions and for diverting the cigarettes from one portion to the other alongside a change in the position of the plate along the storage path.

Variable-capacity stores of the above type involve several drawbacks, due to the arrangement of the two conveying portions one inside the other, which, besides complicating the structure and manufacture of the store, also makes the majority of maintenance jobs particularly complex and awkward.

It is an object of the present invention to provide a straightforward, low-cost, first-in, first-out, variable-capacity store designed to overcome the aforementioned drawback.

According to the present invention, there is provided a variable-capacity store for products, the store comprising a conveying device for feeding the products along a storage path for storing the products, and in turn comprising a first and a second conveying portion for conveying the products; and a diverting device movable along said conveying portions to vary the length of the storage path; the first and second conveying portions extending between a first input and a first output of the store, and winding in a spiral about a common axis of the store; and the store being characterized in that said spiral conveying portions are aligned with each other along said axis.

A non-limiting embodiment of the present invention will be described by way of example with reference to the accompanying drawings, in which:
Figure 1 shows a schematic view in perspective, with parts removed for clarity, of a preferred embodiment of the store according to the present invention;
Figure 2 shows a side view, with parts removed for clarity, of the Figure 1 store;
Figures 3 and 4 show larger-scale views, with parts in section and parts removed for clarity, of a detail in Figure 1;
Figure 5 shows a schematic view in perspective, with parts removed for clarity, of a variation of a detail in Figure 1;
Figure 6 shows a larger-scale view in perspective, with parts in section and parts removed for clarity, of a variation of a further detail in Figure 1.

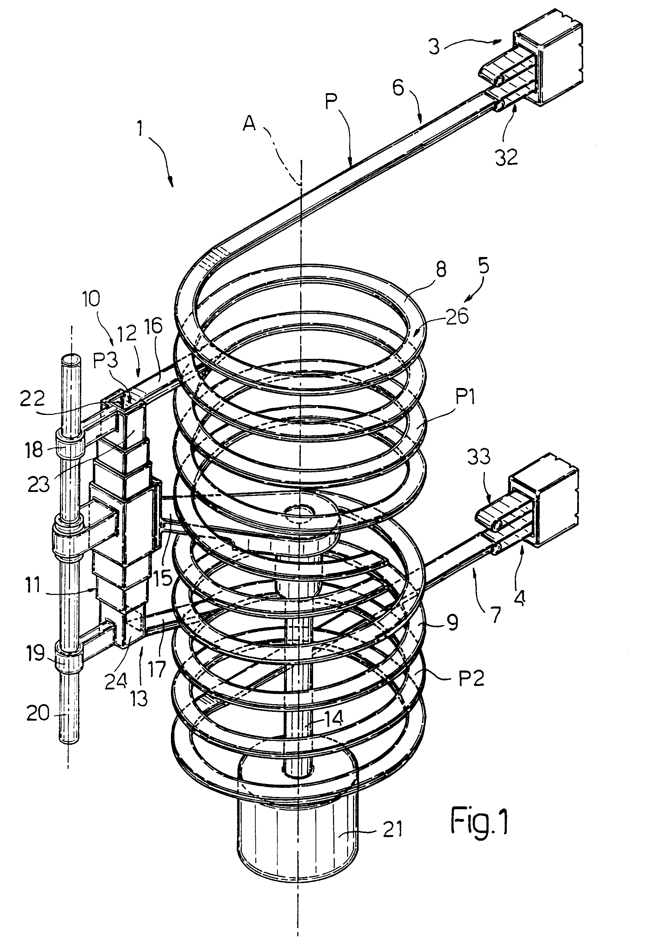

With reference to Figures 1, 2 and 3, number 1 indicates a variable-capacity store for packets 2 of cigarettes, and which, in the example shown, is interposed between the output 3 of a known packing machine (not shown) and the input 4 of a known cellophaning machine (not shown).

Store 1 comprises a conveying device 5 for feeding packets 2 along a storage path P extending between an input 6 of store 1 at output 3 and an output 7 of store 1 at input 4, and of a length L varying between a minimum value L1 corresponding to the minimum capacity of store 1, and a maximum value L2 corresponding to the maximum storage capacity.

Path P comprises two conveying portions P1 and P2, which wind in respective cylindrical spirals of equal diameter about a longitudinal axis A of store 1, and are defined by respective helical plates 8 and 9, which form part of device 5, are fitted to a frame (not shown), and are aligned vertically one on top of the other along axis A. In the example shown, both the cylindrical spirals have the same pitch K, but may differ in pitch as required.

Portions P1 and P2 are oppositely inclined, and are connected to each other by a diverting bridge device 10 forming part of store 1, and which provides for varying the conveying length L of path P to vary the storage capacity of store 1 by intercepting and withdrawing packets 2 along portion P1, and feeding packets 2 back onto portion P2.

Device 10 comprises a straight conveyor 11 located to the side of portions P1 and P2 and parallel to axis A, and defining an intermediate portion P3 of path P; two connecting portions 12 and 13 engaged in sliding manner along respective plates 8 and 9 to connect conveyor 11 to plates 8 and 9; and a shaft 14 fitted coaxially with axis A inside portion P2, and fitted at the top end with a supporting bracket 15 extending between and radially outwards of portions P1 and P2 to support conveyor 11. Connecting portions 12 and 13 comprise respective tangential plates 16 and 17 connected in sliding manner to respective plates 8 and 9, and which slide along plates 8 and 9 to respectively intercept and withdraw packets 2 along portion P1, and feed packets 2 back onto portion P2. Connecting portions 12 and 13 also comprise respective slides 18 and 19 connected to respective plates 16 and 17 and to a cylindrical guide 20 in turn rigidly connected to conveyor 11 and parallel to axis A on the opposite side of conveyor 11 to portions P1 and P2.

Device 10 also comprises a drive motor 21 connected to shaft 14 to rotate conveyor 11 and hence connecting portions 12 and 13 about axis A. Being engaged along respective portions P1 and P2, which, as stated, wind about axis A in respective oppositely inclined cylindrical spirals, connecting portions 12 and 13 therefore move simultaneously to and from each other, parallel to axis A, to vary both the length L3 of conveyor 11 and the length L of path P. More specifically, an increase in length L3, as connecting portions 12 and 13 move away from each other, corresponds to a reduction in length L of path P by plates 16 and 17 moving respectively towards input 6 and output 7; whereas a reduction in length L3, as connecting portions 12 and 13 move towards each other, corresponds to an increase in length L of path P by plates 16 and 17 moving respectively away from input 6 and output 7.

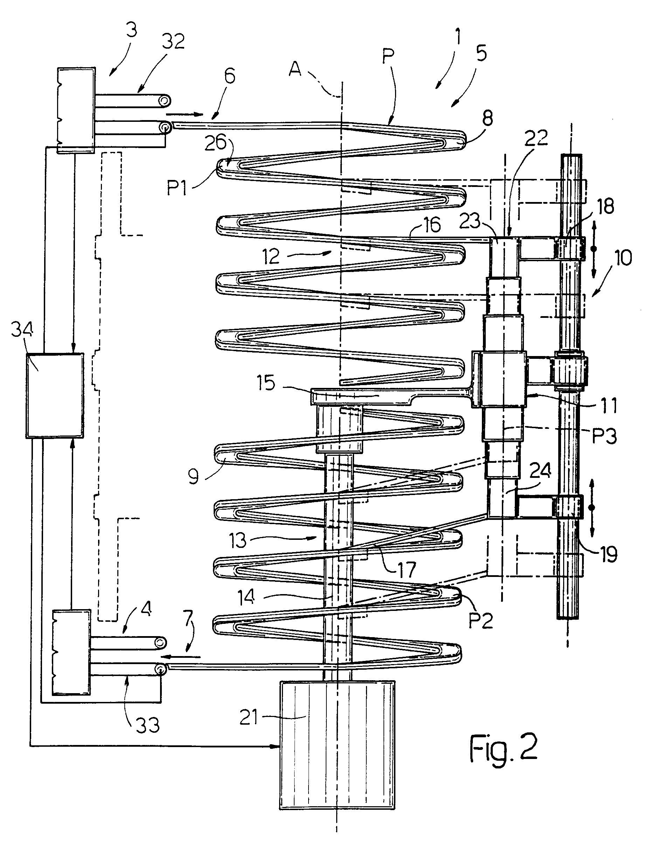

In the example embodiment in Figures 1 and 2, conveyor 11 comprises a telescopic conduit 22 for feeding packets 2 by gravity along portion P3, and which comprises an input portion 23 and an output portion 24 connected to respective plates 16 and 17 and to respective slides 18 and 19.

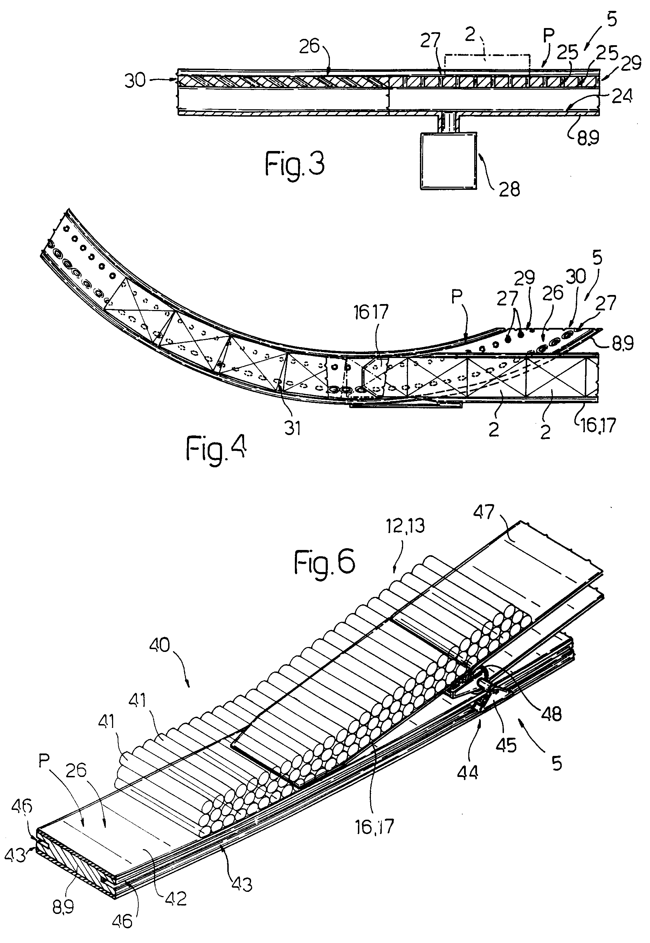

As shown in Figure 3, plates 8 and 9 are pneumatic conveying plates, each of which comprises an inner chamber 24; a number of conduits 25 communicating at the inlet with chamber 24 and at the outlet with an upper conveying surface 26 of plate 8, 9 via respective outlet orifices 27; and a pneumatic device 28 connected to chamber 24 to form on surface 26 an air cushion by which to feed packets 2 along portion P1, P2.

Conduits 25 of each plate 8, 9 are arranged in two successions 29 and 30 parallel to each other along plate 8, 9; succession 29 is located radially inwards with respect to succession 30, and comprises respective conduits 25 crosswise to surface 26 so as to direct the respective air jets upwards and so form said air cushion; and conduits 25 in succession 30 slope forwards with respect to surface 26 so as to direct the respective air jets obliquely with respect to surface 26 and so push packets 2 along path P1, P2. More specifically, the radius of curvature of plates 8 and 9 is such that packets 2 are fed onto surfaces 26 with respective inner edges - i.e. the edges facing axis A - contacting one another, and with respective outer edges separated from one another so as to define, between adjacent packets 2, a gap 31 enabling the air from orifices 27 of conduits 25 in succession 30 to impinge on a rear surface of each packet 2.

In actual use, packets 2 are fed from the packing machine (not shown) to store 1 by a pair of conveyor belts 32 located above and below output 3, are fed along portion P1 by the pneumatic thrust created through orifices 27 by device 28, and are diverted along portion P3 by plate 16 on which packets 2 push one another up to conduit 22. At the output of conduit 22, packets 2 are diverted by plate 17 onto portion P2 and fed to output 7 where another pair of conveyor belts 33, located above and below input 4, feed them to the cellophaning machine.

Operation of store 1 is controlled by a control unit 34 input-connected to belts 32 and 33 to determine the number of packets 2 fed to store 1 by the packing machine, and the number of packets 2 to be fed to the cellophaning machine, and which is connected to motor 21 to control the angular position and angular speed of conveyor 11 about axis A and so control the capacity of store 1.

More specifically, a variation in the angular position of conveyor 11 about axis A increases the capacity of store 1, i.e. increases length L of path P, when connecting portions 12 and 13 are moved towards each other, by virtue of connecting portions 12 and 13 not only being connected to guide 20 so as to move parallel to axis A, but also being connected to respective oppositely-inclined spiral portions P1 and P2. Conversely, a variation in the angular position of conveyor 11 about axis A reduces the capacity of store 1, i.e. reduces length L of path P, when connecting portions 12 and 13 are moved away from each other. In both cases, unit 34 controls and adjusts the rotation speed of conveyor 11 about axis A to prevent packets 2 from being crushed against one another when reducing length L, and to prevent packets 2 from being detached from one another when increasing length L.

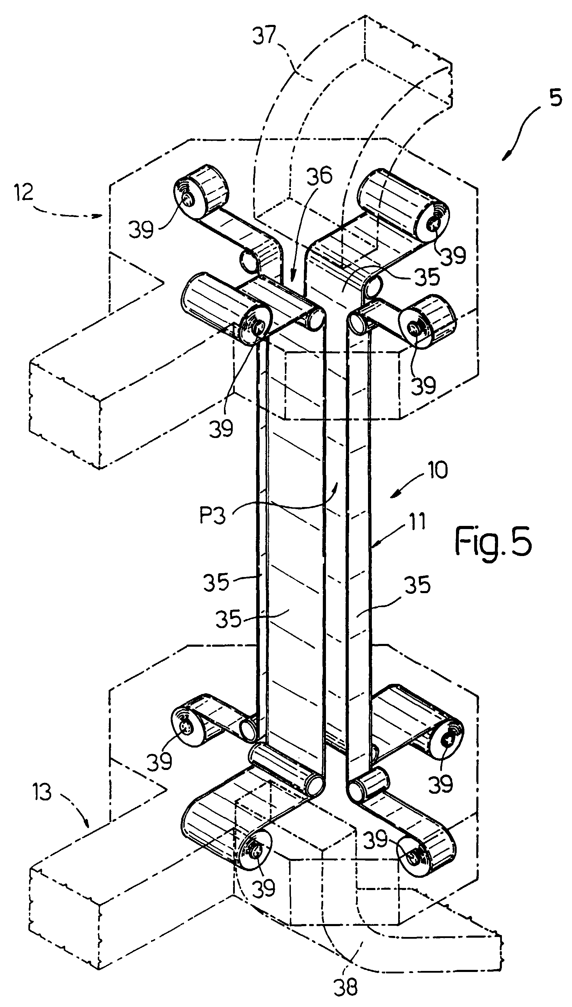

Figure 5 shows a further embodiment of conveyor 11, which, as opposed to a telescopic conduit 22, comprises four retaining belts 35 facing one another in pairs on opposite sides of portion P3 to define a channel 36, which is connected to plates 16 and 17 by two curved conduits 37 and 38 and provides for feeding packets 2 along portion P3. Each belt 35 is wound at opposite ends about respective rollers 39 fitted in rotary manner to connecting portions 12 and 13, and each having a known rewinding device (not shown) for automatically rewinding and tensioning belt 35. When increasing length L of path P and hence reducing length L3 of conveyor 11, belts 35 are wound about respective rollers 39 to reduce length L3. Conversely, when reducing length L of path P, belts 35 are unwound off respective rollers 39 to increase length L3.

Finally, Figure 6 shows a detail of a variable-capacity store 40 substantially similar to store 1, except that store 40 provides for storing masses of cigarettes 41, and is interposed between the output 3 of a known filter assembly machine (not shown) and the input 4 of a known packing machine (not shown).

For each plate 8, 9, conveying device 5 of store 40 comprises a conveyor belt 42, which is looped about two pulleys (not shown) at the ends of plate 8, 9, is flexible laterally so as to rest on surface 26 of plate 8, 9 along the whole of path P1, P2, and provides for feeding cigarettes 41 along path P1, P2. Moreover, plates 16 and 17 of connecting portions 12 and 13 of store 40 rest at the free end on surface 26, and are connected in sliding manner at the other end to the lateral edges 43 of plate 8, 9 by a guide device 44 comprising two supporting brackets 45 (only one shown) engaging in sliding manner respective longitudinal grooves 46 (only one shown) formed along edges 43.

Moreover, connecting portions 12 and 13 comprise respective conveyor belts 47 looped about two pulleys 48, of which the one shown is an idle pulley fitted in rotary manner to guide device 44, and the one not shown is a drive pulley substantially located at respective input portion 23 or output portion 24 of conveyor 11, and connected to control unit 34 to regulate the traveling speed of belts 47 with respect to the traveling speed of belts 42.

Operation of store 40 is clearly understandable from the foregoing description and from the operating description of store 1, and therefore needs no further explanation.

## Claims

1. A variable-capacity store for products, the store comprising a conveying device (5) for feeding the products (2) along a storage path (P), and in turn comprising a first and a second conveying portion (P1, P2) for conveying the products (2); and a diverting device (10) movable along said conveying portions (P1, P2) to vary the length of the storage path (P); the first and second conveying portions (P1, P2) extending between a first input (6) and a first output (7) of the store (1), and winding in a spiral about a common axis (A) of the store (1); and the store (1) being characterized in that said conveying portions (P1, P2) are aligned with each other along said axis (A).

2. A store as claimed in Claim 1, characterized in that said conveying portions (P1, P2) are oppositely inclined.

3. A store as claimed in Claim 2, characterized in that said diverting device (10) comprises a conveyor (11) in turn comprising a second input (23) and a second output (24), both connected in sliding manner along respective said conveying portions (P1, P2) and movable along the conveying portions (P1, P2) to vary the length of the storage path (P); said conveyor (11) defining a central conveying portion (P3) of the storage path (P).

4. A store as claimed in Claim 3, characterized in that said central conveying portion (P3) is a straight conveying portion, and is parallel to said axis (A).

5. A store as claimed in Claim 3 or 4, characterized in that said diverting device (10) comprises a supporting element (20) connected to said conveyor (11); and drive means (21) for rotating the supporting element (20) and the conveyor (11) about said axis (A); said second input (23) and said second output (24) being fitted in sliding manner to said support (20), and being movable to and from each other parallel to said axis (A).

6. A store as claimed in Claim 5, characterized in that said conveyor (11) comprises a straight conduit (22; 36) of variable length and extending between said second input (23) and said second output (24).

7. A store as claimed in Claim 6, characterized in that said straight conduit (22) is a telescopic conduit.

8. A store as claimed in Claim 6, characterized in that said straight conduit (36) is defined by at least a pair of belts (35) for retaining said products (2).

9. A store as claimed in any one of the foregoing Claims, characterized in that said first and second conveying portions (P1, P2) comprise respective pneumatic conveying plates (8, 9), each of which comprises a number of conduits (25) arranged in a first (29) and a second (30) succession parallel to each other along the respective pneumatic conveying plate (8, 9), and having respective outlet orifices (27) formed through a conveying surface (26) of the respective pneumatic conveying plate (8, 9); the conduits (25) in the first succession (29) being crosswise to said conveying surface (26); and the conduits (25) in the second succession (30) being inclined with respect to said conveying surface (26).

10. A store as claimed in Claim 9, characterized in that said first succession (29) is located radially inwards with respect to said second succession (30).

11. A store as claimed in any one of the foregoing Claims from 1 to 8, characterized in that said first and second conveying portions (P1, P2) comprise respective spiral supporting plates (8, 9), and respective conveyor belts (42) extending in contact with and along said supporting plates (8, 9).
